# EUROPEAN PATENT APPLICATION

(11) **EP 3 787 142 A1**
(43) Date of publication of application: **03.03.2021**
(21) Application number: 19811344.1
(22) Date of filing: 21.03.2019
(51) Int. Cl.: H02J 3/18

(54) **COMPENSATOR, CONTROL METHOD AND DEVICE THEREFOR**

(30) Priority: 28.05.2018 CN 201810519426; 28.05.2018 CN 201810519375; 28.05.2018 CN 201810519409
(71) Applicant: NR Electric Co., Ltd., Nanjing, Jiangsu 211102 (CN); NR Engineering Co., Ltd., Nanjing, Jiangsu 211102 (CN)
(72) Inventor: DONG, Yunlong, Nanjing, Jiangsu 211102 (CN); ZHANG, Baoshun, Nanjing, Jiangsu 211102 (CN); PAN, Lei, Nanjing, Jiangsu 211102 (CN); HUANG, Ruhai, Nanjing, Jiangsu 211102 (CN)
(74) Representative: Kurig, Thomas
(86) International application number: PCT/CN2019/079078
(87) International publication number: WO 2019/228028

(57) **Abstract**

Provided in the present application are a compensator, a control method and device therefor. The compensator comprises: a first inverter, comprising six branch circuits, the branch circuits comprising combined power units and reactors connected in series; the combined power units comprising: first power units and second power units connected in series or second power units connected in series; a first transformer, at least comprising a first side winding and a second side winding, the first side winding being connected to an alternating current-side interface of the first inverter, the second side winding being connected in series to a circuit of an alternating current system; the second side winding being connected in parallel on either end to a switch; and the switch, connected in parallel to the first transformer and then connected to the circuit of the alternating current system.

## Description

### Technical Field

The present invention refers to the field of power electronic technologies for power systems, and particularly relates to a compensator, a control method and device therefor.

### Background

The inventor finds that the rapid development of power systems leads to the problems of ever increasing loads, more and more complicated grid structures, mass access of new energy, non-uniform distribution of power flows, low voltage support capacity, overlarge short-circuit currents and electromechanical oscillations, which bring new challenges to operation control of power grids. Due to the saturation of power transmission corridors and commercial operation of state grids, it is becoming more and more difficult to improve the power transmission capacity by building new power transmission lines. FACTS, as an alternating-current power transmission system which adopts power electronic equipment and other static controllers to improve the controllability and power transmission capacity of the system, provides a solution to the aforesaid problems.

The inventor also finds that compensators with series compensation and phase-shifting control functions such as static synchronous series compensators (SSSCs) adopting modular multi-level voltage source inverters, unified power flow controllers (UPFCs) and interline power flow controllers (IPFCs) can optimize and control system power flows. However, due to the after-flow effect of diodes of power units adopted by these compensators, such compensators cannot remove DC faults automatically by means of rapid control, and the security of equipment may be affected in case of a severe fault. In view of this, it is necessary to develop a compensator which can optimize system power flows, reduce the DC voltage and the current in case of a fault under the condition of keeping the alternating voltage accessed to a circuit line unchanged, and restrain the direct current-side fault current more safely and reliably.

### Summary

An embodiment of the present application provides a compensator, comprising a first inverter, a first transformer and a switch, wherein the first inverter comprises six branch circuits, and the branch circuits comprise combined power units and reactors connected in series; the combined power units comprise first power units and second power units connected in series, or second power units connected in series; each of the first powers unit at least comprises a first turn-off device T1, a second turn-off device T2 and a first capacitor C1, one terminal of the first capacitor C1 is connected to a positive electrode of the first turn-off device T1, another terminal of the first capacitor C1 is connected to a negative electrode of the second turn-off device T2 and used as a first output terminal of the first power unit, and a positive electrode of the second turn-off device is connected to a negative electrode of the first turn-off device and used as a second output terminal of the first power unit; each of the second power units at least comprises a third turn-off device T3, a fourth turn-off device T4, a fifth turn-off device T5, a sixth turn-off device T6 and a second capacitor C2, one terminal of the second capacitor C2 is connected to a positive electrode of the third turn-off device T3 and the positive electrode of the fourth turn-off device T4, another terminal the second capacitor C2 is connected to a negative electrode of the fifth turn-off device T5 and a negative electrode of the sixth turn-off device T6, a negative electrode of the third turn-off device T3 is connected to a positive electrode of the fifth turn-off device T5 and used as a second output terminal of the second power unit, and a negative electrode of the fourth turn-off device T4 is connected to a positive electrode of the sixth turn-off device T6 and used as a first output terminal of the second power unit; the first transformer at least comprises a first side winding and a second side winding, wherein the first side winding is connected to an alternating current-side interface of the first inverter, the second side winding is connected in series to a circuit of an alternating current system, and two terminals of the second side winding are connected in parallel to the switch; and the switch is connected in parallel to the first transformer and then connected to the circuit of the alternating current system.

Furthermore, the compensator further comprises a second inverter comprising an alternating current-side interface through which the second inverter is connected to the alternating current system, and a direct current-side interface connected in parallel to the first inverter.

Furthermore, the compensator further comprises a reactive compensation device connected to the alternating current system.

Furthermore, in the six branch circuits, a first terminal of a first branch circuit is connected to a first terminal of a second branch circuit where a connection point thereof is defined as a first alternating current-side interface; a first terminal of a third branch circuit is connected to a first terminal of a fourth branch circuit where a connection point thereof is defined as a second alternating current-side interface; a first terminal of a fifth branch circuit is connected to a first terminal of a sixth branch circuit where a connection point thereof is defined as a third alternating current-side interface; a second terminal of the first branch circuit is connected to a second terminal of the third branch circuit and a second terminal of the fifth branch circuit where a connection point thereof is defined as a direct current-side positive interface; a second terminal of the second branch circuit is connected to a second terminal of the fourth branch circuit and a second terminal of the sixth branch circuit where a connection point thereof is defined as a direct current-side negative interface.

Furthermore, the turn-off devices include one or more controllable switch devices which are one of IGBTs, IGCTs, MOSFETs and GTOs.

Furthermore, a first compensation device is connected in series between the second side winding of the first transformer and the circuit.

Furthermore, a second compensation device is connected in series between the first side winding of the first transformer and the alternating current-side interface of the first inverter.

Furthermore, the first compensation device or the second compensation device comprises a reactor bank and a switch device connected in parallel, the reactor bank comprises at least one reactor connected in series, and the switch device includes one or more of a mechanical switch and a switch constituted of a power electronic device.

Furthermore, two terminals of the first side winding of the first transformer are connected in parallel to a bypass switch device, and the bypass switch device includes one or more of a mechanical switch and a switch constituted of a power electronic device.

Furthermore, the first side winding of the first transformer is in a Y-connection mode or a delta-connection mode.

Furthermore, the first side winding of the first transformer is in a Y-connection mode and has a neutral point grounded directly or through a resistor, and the first transformer comprises a third side winding in a delta-connection mode.

Furthermore, the second inverter is connected to the alternating current system through a second transformer, the second transformer is a three-phase transformer and at least comprises two side windings, the alternating current-side interface of the second inverter is connected to the first side winding of the second transformer, and the second side winding of the second transformer is connected in parallel to the alternating current system.

Furthermore, a resistor and a switch device connected in parallel are configured between the alternating current-side interface of the second inverter and the alternating current system, and the switch device is a knife switch or a switch.

Furthermore, the second inverter is a voltage source inverter and is of a two-level structure, a three-level structure, a multi-transformer structure or a modular multi-level structure.

Furthermore, the second inverter is a thyristor inverter or an uncontrolled rectifier bridge constituted of diodes.

Another embodiment of the present application provides a method of controlling a compensator, comprising: determining an active power reference value of a first inverter based on an active power indicated value and an active power measured value of a circuit; determining a reactive power reference value of the first inverter based on a reactive power indicated value and a reactive power measured value of the circuit; calculating an alternating current-side interface current reference value of the first inverter based on the active power reference value and the reactive power reference value of the first inverter; determining an alternating current-side output voltage reference value of the first inverter based on the alternating current-side interface current reference value of the first inverter; and controlling turn-off devices in combined power units to be on or off based on the alternating current-side output voltage reference value of the first inverter, so as to control output voltages of the combined power units to ensure that numbers of first power units and second power units respectively outputting a 0 voltage, a capacitor voltage and a negative capacitor voltage at a same time meet an alternating current-side output voltage reference value and a direct current-side output voltage reference value, so that a direct current-side voltage is decreased under a precondition that compensation is guaranteed.

Furthermore, when the compensator is to be started, the method further comprises before determining an active power reference value of a first inverter based on an active power indicated value and an active power measured value of a circuit: unlocking the first inverter; controlling a current through a switch to decrease gradually and a current of the circuit to migrate gradually to the second side winding of the first transformer; and turning off the switch, after the current of the switch decreases to zero, to start the compensator.

Furthermore, in case that the compensator comprises a second inverter, when the compensator is to be started, the method further comprises before unlocking the first inverter: starting the second inverter to establish a direct voltage.

Furthermore, when the compensator is to be stopped, the method further comprises before controlling turn-off devices in combined power units to be on or off based on the alternating current-side output voltage reference value of the first inverter: controlling a current of the second side winding of the first transformer to be equal to that of the circuit; turning on the switch; controlling the current to migrate gradually from the second side winding of the first transformer to the switch; and locking the first inverter after the current of the second side winding of the first transformer decreases to zero.

Furthermore, in case that the compensator comprises a second inverter, when the compensator is to be stopped, the method further comprises after locking the first inverter after the current of the second side winding of the first transformer is zero: quitting the second inverter to stop the compensator.

Another embodiment of the present application provides a control device of a compensator, comprising a first circuit active power control unit, a first circuit reactive power control unit, a first alternating current-side interface current calculation unit, a first alternating current-side interface voltage calculation unit and a first power unit control unit, wherein the first circuit active power control unit is used for determining an active power reference value of a first inverter based on an active power indicated value and an active power measured value of a circuit; the first circuit reactive power control unit is used for determining a reactive power reference value of the first inverter based on a reactive power indicated value and a reactive power measured value of the circuit; the first alternating current-side interface current calculation unit is used for calculating an alternating current-side interface current reference value of the first inverter based on the active power reference value and the reactive power reference value of the first inverter; the first alternating current-side interface voltage calculation unit is for determining an alternating current-side output voltage reference value of the first inverter based on the alternating current-side current interface reference value of the first inverter; and the first power unit control unit is used for controlling turn-off devices in combined power units to be on or off based on the alternating current-side output voltage reference value of the first inverter, so as to control output voltages of the combined power units to ensure that numbers of first power units and second power units respectively outputting a 0 voltage, a capacitor voltage and a negative capacitor voltage at a same time meet an alternating current-side output voltage reference value and a direct current-side output voltage reference value, so that a direct current-side voltage is decreased under a precondition that compensation is guaranteed.

Furthermore, the control device further comprises a start control unit and a stop control unit, wherein the start control unit is used for unlocking the first inverter when the compensator is to be started, controlling a current through a switch to decrease gradually and to a current of the circuit migrate gradually to the second side winding of the first transformer, and turning off the switch to start the compensator when the current of the switch decreases to zero; the stop control unit is used for controlling a current of the second side winding of the first transformer to be equal to that of the circuit when the compensator is to be stopped, turning on the switch, controlling the current to migrate gradually from the second side winding of the first transformer to the switch, and locking the first inverter to stop the compensator after the current of the second side winding of the first transformer is zero.

In an optional solution, where the compensator comprises a second inverter, the control device further comprises: a start control unit for starting the second inverter to establish a direct voltage when the compensator is to be started, unlocking the first inverter, controlling a current through a switch to decrease gradually and a current of the circuit to migrate gradually to the second side winding of the first transformer, and turning off the switch to start the compensator after the current of the switch decreases to zero; and a stop control unit for controlling a current of the second side winding of the first transformer to be equal to that of the circuit when the compensator is to be stopped, turning on the switch, controlling the current to migrate gradually from the second side winding of the first transformer to the switch, locking the first inverter after the current of the second side winding of the first transformer is zero, and quitting the second inverter to stop the compensator.

By adoption of the technical solutions provided by the present application, a compensation function and a phase-shifting control function are realized, and the active power and reactive power of a power transmission line can be rapidly controlled; the inverter adopts two different power units, so that the direct current-side voltage and the fault current during a direct current-side fault are effectively decreased; and the switch is configured according to the special structure of the first transformer, so that the reliability of the compensator is improved.

### Brief Description of the Drawings

To explain the technical solutions of the embodiments of the present application more clearly, drawings used for describing the embodiments will be briefly introduced below. Obviously, the drawings in the following description are merely illustrative ones of the present application, and those ordinarily skilled in the art can obtain other drawings according to the following ones without creative labor.
FIG. 1 is a schematic diagram of a compensator provided by one embodiment of the present application;
FIG. 2 is a schematic diagram of the compensator having a first compensation device connected in series thereto, provided by one embodiment of the present application;
FIG. 3 is a schematic diagram of the compensator having a second compensation device connected in series thereto, provided by one embodiment of the present application;
FIG. 4 is a schematic diagram of the compensator having a bypass switch device connected in parallel thereto, provided by one embodiment of the present application;
FIG. 5 is a schematic diagram of a transformation of the compensator in FIG. 1 of the present application;
FIG. 6 is a schematic diagram of the compensator, having a second inverter connected in parallel thereto, provided by one embodiment of the present application;
FIG. 7 is a schematic diagram of the compensator with the second inverter connected to an alternating current system through a second transformer, on the basis of FIG. 6;
FIG. 8 is a schematic diagram of the compensator configured with a resistor and a switch device connected in parallel, on the basis of FIG. 6;
FIG. 9 is a schematic diagram of the compensator using a two-level inverter as the second inverter, on the basis of FIG. 6;
FIG. 10 is a schematic diagram of the compensator using a three-level inverter as the second inverter, on the basis of FIG. 6;
FIG. 11 is a schematic diagram of the compensator using a modular multi-level inverter as the second inverter, on the basis of FIG. 6;
FIG. 12 is a schematic diagram of the compensator using a thyristor inverter as the second inverter, on the basis of FIG. 6;
FIG. 13 is a schematic diagram of the compensator using an uncontrolled rectifier bridge, constituted of diodes, as the second inverter, on the basis of FIG. 6;
FIG. 14 is a schematic diagram of the compensator with the second inverter formed by third power units, or fourth power units, or the third units and the fourth power units connected in series in any sequences, on the basis of FIG. 6;
FIG. 15 is a schematic diagram of the compensator, having a first compensation device connected in series thereto, on the basis of FIG. 6;
FIG. 16 is a schematic diagram of the compensator having a second compensation device connected in series thereto, on the basis of FIG. 6;
FIG. 17 is a schematic diagram of the compensator having a bypass switch device connected in parallel thereto, on the basis of FIG. 6;
FIG. 18 is a schematic diagram of the compensator configured with a reactive compensation device, provided by one embodiment of the present application;
FIG. 19 is a schematic diagram of the compensator with a second inverter connected to an alternating current system through a second transformer, on the basis of FIG. 18;
FIG. 20 is a schematic diagram of the compensator configured with a resistor and a switch device connected in parallel, on the basis of FIG. 18;
FIG. 21 is a schematic diagram of the compensator using a two-level inverter as the second inverter, on the basis of FIG. 18;
FIG. 22 is a schematic diagram of the compensator using a three-level inverter as the second inverter, on the basis of FIG. 18;
FIG. 23 is a schematic diagram of the compensator using a modular multi-level inverter as the second inverter, on the basis of FIG. 18;
FIG. 24 is a schematic diagram of the compensator using a thyristor inverter as the second inverter, on the basis of FIG. 18;
FIG. 25 is a schematic diagram of the compensator using an uncontrolled rectifier bridge, constituted of diodes, as the second inverter, on the basis of FIG. 18;
FIG. 26 is a schematic diagram of the compensator having a first compensation device connected in series thereto, on the basis of FIG. 18;
FIG. 27 is a schematic diagram of the compensator having a second compensation device connected in series thereto, on the basis of FIG. 18;
FIG. 28 is a schematic diagram of the compensator having a bypass switch device connected in parallel thereto, on the basis of FIG. 18;
FIG. 29 is a flow diagram of a control method of the compensator, provided by one embodiment of the present application;
FIG. 30 is a flow diagram of a control method of the compensator, provided by another embodiment of the present application;
FIG. 31 is a component diagram of a control device of the compensator, provided by one embodiment of the present application;
FIG. 32 is a component diagram of a control device of the compensator, provided by another embodiment of the present application.

### Detailed Description of Embodiments

To make the purposes, technical solutions and advantages of the embodiments of the present application clearer, specific implementations of the technical solutions of the present application will be more clearly explained below in further detail. Obviously, the specific implementations and embodiments in the following description are merely for the purpose of explaining the present application, and are not intended to limit the present application. The following embodiments are only illustrative ones, and not all possible ones of the present application. Other embodiments obtained by transforming the present application by those skilled in the art should also fall within the protection scope of the present application.

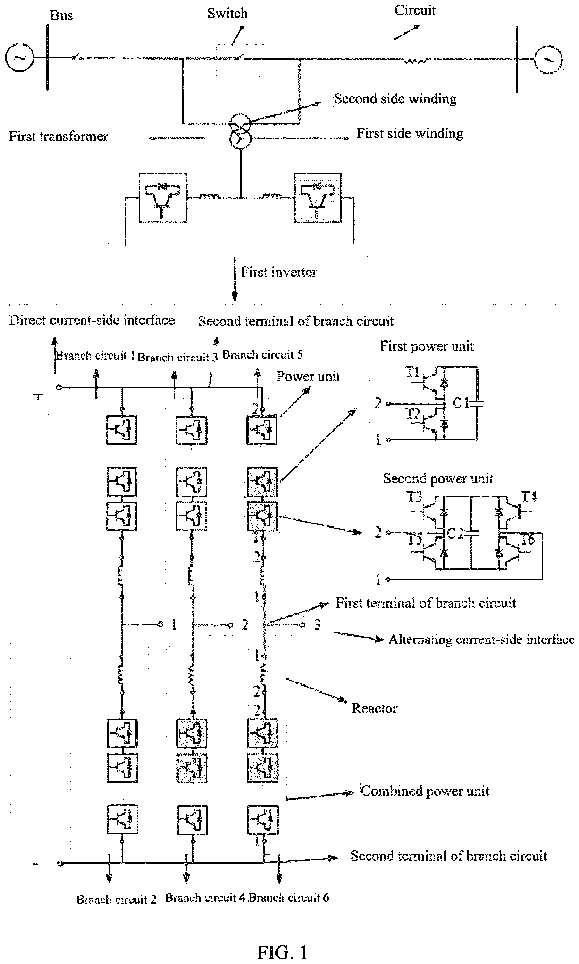

FIG. 1 is a schematic diagram of a compensator provided by one embodiment of the present application. As shown in FIG. 1, the compensator at least comprises at least a first inverter, a first transformer and a switch.

The first inverter is constituted of six branch circuits, wherein a first terminal of the first branch circuit is connected to a first terminal of the second branch circuit where the connection point is defined as a first alternating current-side interface; a first terminal of the third branch circuit is connected to a first terminal of the fourth branch circuit where the connection point is defined as a second alternating current-side interface; a first terminal of the fifth branch circuit is connected to a first terminal of the sixth branch circuit where the connection point is defined as a third alternating current-side interface; a second terminal of the first branch circuit is connected to a second terminal of the third branch circuit and a second terminal of the fifth branch circuit where the point is defined as a direct current-side positive interface; a second terminal of the second branch circuit is connected to a second terminal of the fourth branch circuit and a second terminal of the sixth branch circuit where the connection point is defined as a direct current-side negative interface. The first transformer is a three-phase first transformer and at least comprises two side windings, wherein the first side winding is connected to an alternating current-side interface of the first inverter, the second side winding is connected in series to the circuit of an alternating current system, and two terminals of the second side winding are connected in parallel to the switch.

The branch circuits comprise combined power units and reactors connected in series. In the first branch circuit, the third branch circuit and the fifth branch circuit, first terminals of the reactors are defined as the first terminals of the branch circuits, second terminals of the reactors are connected to first output terminals of the combined power units, and second output terminals of the combined power units are defined as the second terminals of the branch circuits. In the second branch circuit, the fourth branch circuit and the sixth branch circuits, first terminals of the reactors are defined as the first terminals of the branch circuits, second terminals of the reactors are connected to second output terminals of the combined power units, and first output terminals of the combined power units are defined as the second terminals of the branch circuits.

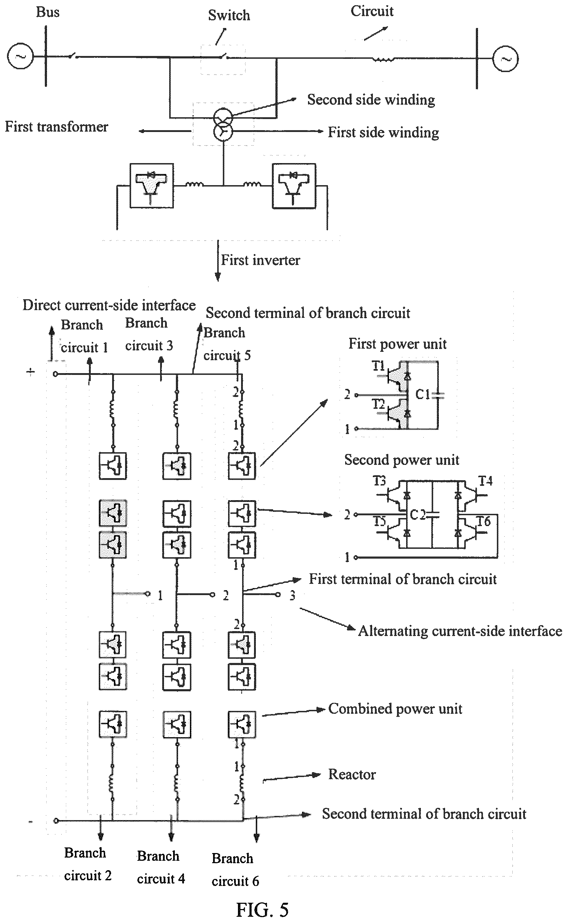

Specifically, the combined power units and the reactors can be transposed, and the present application has no limitation in this aspect. As shown in FIG. 5, in the first branch circuit, the third branch circuit and the fifth branch circuit, the first output terminals of the combined power units are defined as the first terminals of the branch circuits, the second terminals of the combined power units are connected to the first terminals of the reactors, and the second terminals of the reactors are defined as the second terminals of the branch circuits. In the second branch circuit, the fourth branch circuit and the sixth branch circuit, the second output terminals of the combined power units are defined as the first terminals of the branch circuits, the first output terminals of the combined power units are connected to the first terminals of the reactors, and the second terminals of the reactors are defined as the second terminals of the branch circuits.

The combined power units comprise first power units and second power units connected in series. The first power units and the second power units can be connected in series in any sequences.

Each of the first power units at least comprises a first turn-off device T1, a second turn-off device T2 and a first capacitor C1, wherein one terminal of the first capacitor C1 is connected to the positive electrode of the first turn-off device T1, and the other terminal of the first capacitor C1 is connected to the negative electrode of the second turn-off device T2 and used as a first output terminal of the first power unit; the positive electrode of the second turn-off device T2 is connected to the negative electrode of the first turn-off device and used as a second output terminal of the first power unit.

Each of the second power units at least comprises a third turn-off device T3, a fourth turn-off device T4, a fifth turn-off device T5, a sixth turn-off device T6 and a second capacitor C2, wherein one terminal of the second capacitor C2 is connected to the positive electrode of the third turn-off device T3 and the positive electrode of the fourth turn-off device T4, the other terminal of the second capacitor C2 is connected to the negative electrode of the fifth turn-off device T5 and the negative electrode of the sixth turn-off device T6, the negative electrode of the third turn-off device T3 is connected to the positive electrode of the fifth turn-off device T5 and used as a second output terminal of the second power unit, and the negative electrode of the fourth turn-off device T4 is connected to the positive electrode of the sixth turn-off device T6 and used as a first output terminal of the second power unit.

The turn-off devices include, but are not limited to, one or more controllable switch devices which are selected from, but not limited to, one of IGBTs, IGCTs, MOSFETs and GTOs. The turn-off devices may be formed by multiple controllable switch devices connected in series or in parallel. When the turn-off devices are IGBTs, the positive electrodes of the turn-off devices are collectors of the IGBTs, and the negative electrodes of the turn-off devices are emitters of the IGBTs. When the turn-off devices are IGCTs or GTOs, the positive electrodes of the turn-off devices are anodes of the IGCTs or GTOs, and the negative electrodes of the turn-off devices are cathodes of the IGCTs or GTOs. When the turn-off devices are MOSFETs, the positive electrodes of the turn-off devices are drains of the MOSFETs, and the negative electrodes of the turn-off devices are sources of the MOSFETs.

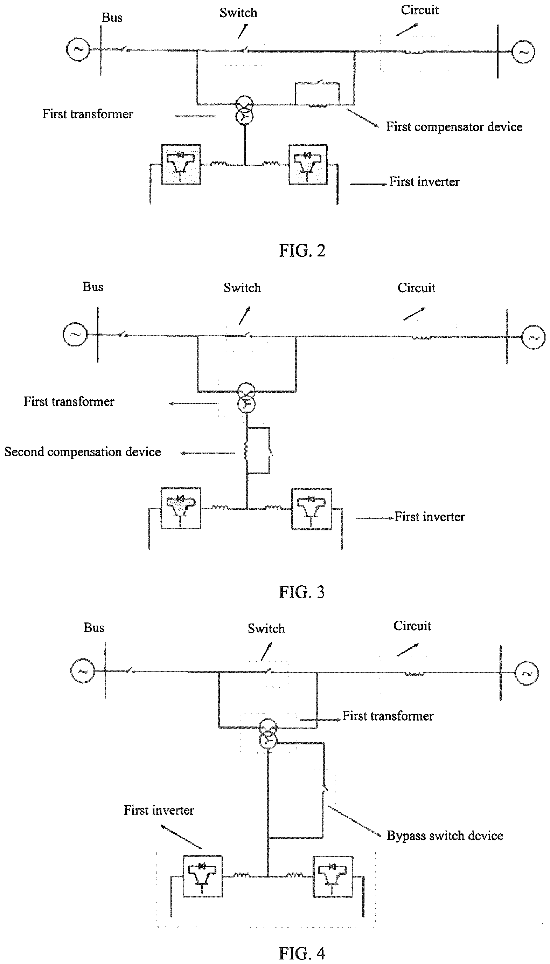

FIG. 2 is a schematic diagram of the compensator having a first compensation device connected in series thereto, provided by one embodiment of the present application. As shown in FIG. 2, the first compensation device is connected in series between the second side winding of the first transformer and the circuit. FIG. 3 is a schematic diagram of the compensator having a second compensation device connected in series thereto, provided by one embodiment of the present application. As shown in FIG. 3, the second compensation device is connected in series between the first side winding of the first transformer and the alternating current-side interface of the first inverter. The first compensation device and the second compensation device are connected in parallel to a switch device through a reactor bank, the reactor bank comprises at least one reactor connected in series, and the switch device is, but not limited to, a mechanical switch, or a switch constituted of a power electronic device.

FIG. 4 is a schematic diagram of the compensator having a bypass switch device connected in parallel thereto, provided by one embodiment of the present application. As shown in FIG. 4, the bypass switch device is connected in parallel to two terminals of the first side winding of the first transformer, and the bypass switch device is, but not limited to, a mechanical switch, or a switch constituted of a power electronic device.

The first side winding of the first transformer is in a Y-connection mode or a delta connection mode. When the first side winding of the first transformer is in the Y-connection mode, a neutral point is grounded directly or through a resistor. When the first transformer comprises a third side winding, the third side winding is in the delta connection mode.

The alternating current-side output voltage of the first inverter is connected in series to the circuit through the first transformer, which is equivalent to connecting a voltage source with a controllable amplitude and a controllable phase to the circuit, so that an amplitude difference and a phase difference between voltages of two terminals of the circuit are changed, and control and regulation of the active power and reactive power of the circuit are realized. On-off of the turn-off devices in the combined power units can be controlled by means of an external device. Output voltages of the power units can be changed and regulated, wherein the output voltage of the first power unit may be 0 or the voltage of the capacitor in the power unit, and the output voltage of the second power unit may be 0, or the voltage of the capacitor in the power unit, or the negative value of the voltage of the capacitor in the power unit. In the first inverter, the sum of the output voltages of all the power units of the first branch circuit is equal to the sum of the output voltages of all the power units of the second branch circuit, the sum of the output voltages of all the power units of the third branch circuit is equal to the sum of the output voltages of all the power units of the fourth branch circuit, the sum of the output voltages of all the power units of the fifth branch circuit is equal to the sum of the output voltages of all the power units of the sixth branch circuit, and the direct current-side voltage is equal to the output voltage, so that by configuring the second power units with the output voltage equal to the negative capacitor voltage in the combined power units, the direct current-side voltage can be decreased. During normal operation, by controlling the second power units to output negative voltages, the direct voltage can be decreased under the precondition that the alternating voltage connected in series to the circuit is not changed, and the current can be decreased in case of a fault. When a fault happens to the direct current side, the fault current can be effectively restrained by means of the characteristic of bidirectional voltage output of the second power units.

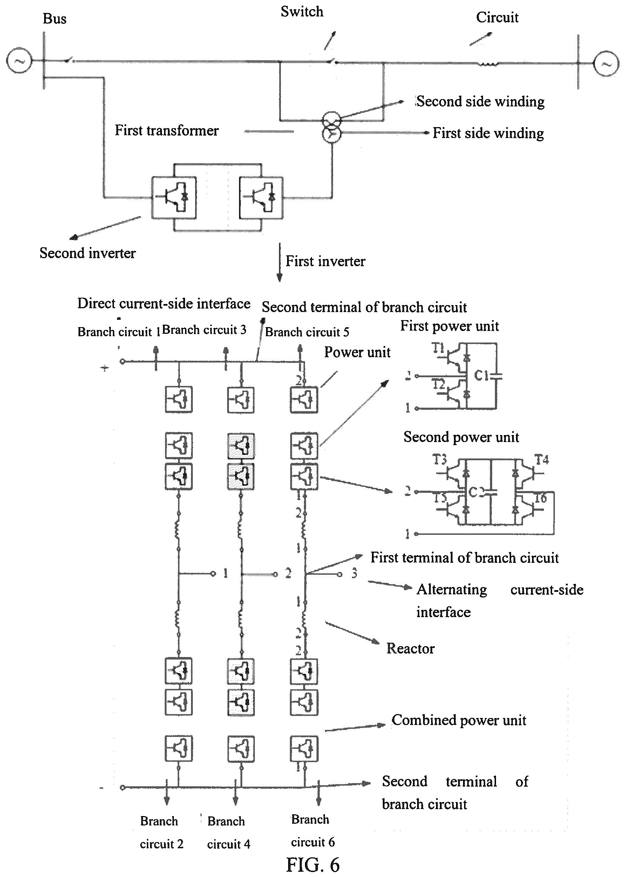

FIG. 6 is a schematic diagram of the compensator having a second inverter connected in parallel thereto, provided by one embodiment of the present application. As shown in FIG. 6, the compensator comprises a first inverter, a second inverter, a first transformer and a switch. The second inverter comprises an alternating current-side interface and a direct current-side interface and is connected to an alternating current system through the alternating current-side interface. The first inverter, the first transformer and the switch are identical with the first inverter, the first transformer and the switch in the above embodiment and will not detailed anymore.

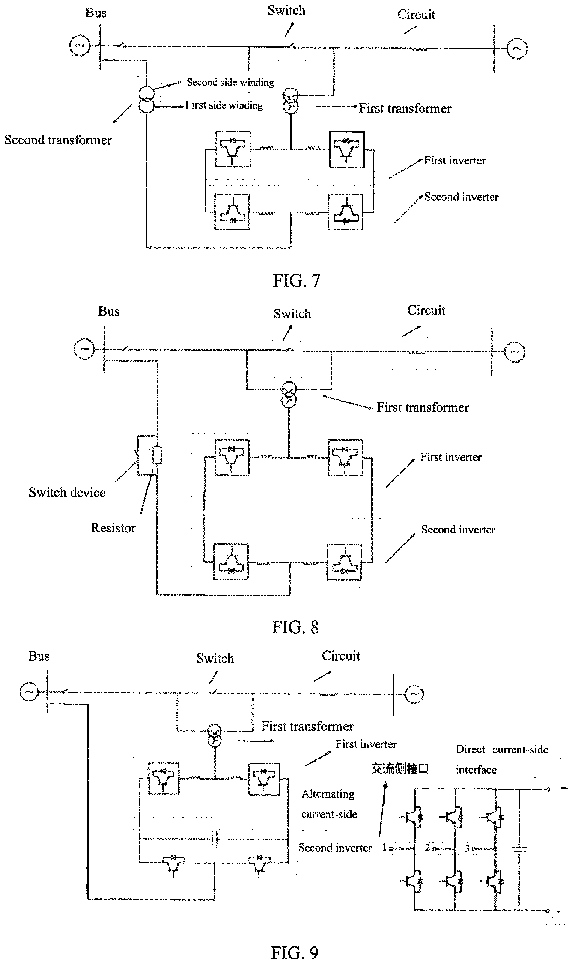

FIG. 7 is a schematic diagram of the compensator with the second inverter connected to the alternating current system through a second transformer, on the basis of FIG. 6. As shown in FIG. 7, the second inverter is connected to the alternating current system through a second transformer. The second transformer is a three-phase transformer and at least comprises two side windings, the alternating current-side interface of the second inverter is connected to the first side winding of the second transformer, and the second side winding of the second transformer is connected in parallel to the alternating current system.

FIG. 8 is a schematic diagram of the compensator configured with a resistor and a switch device connected in parallel, on the basis of FIG. 6. As shown in FIG. 8, the resistor and the switch device connected in parallel are configured between the alternating current-side interface of the second transformer and the alternating current system, and the switch device is, but not limited to, a knife switch or a switch.

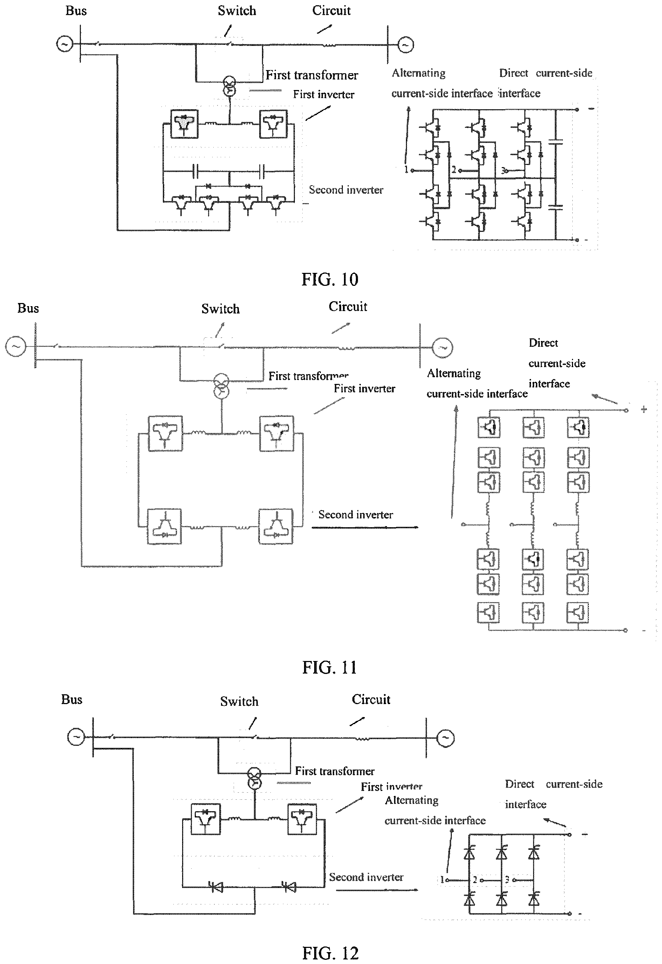

The second inverter is, but not limited to, a voltage source inverter and is, but not limited to, a two-level structure, a three-level structure, a multi-transformer structure or a modular multi-level structure, as shown in FIG. 9, FIG. 10 and FIG. 11. FIG. 9 is a schematic diagram of the compensator using a two-level inverter as the second inverter, on the basis of FIG. 6. FIG. 10 is a schematic diagram of the compensator using a three-level inverter as the second inverter, on the basis of FIG. 6. FIG. 11 is a schematic diagram of the compensator using a modular multi-level inverter as the second inverter, and the second inverter is of a modular multi-level structure, on the basis of FIG. 6.

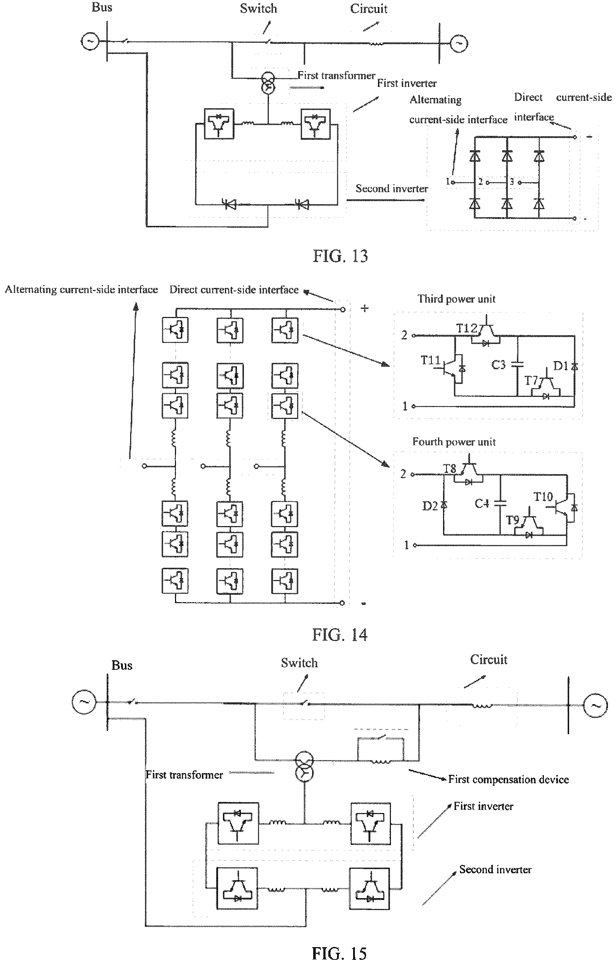

FIG. 12 is a schematic diagram of the compensator using a thyristor inverter as the second inverter, on the basis of FIG. 6. As shown in FIG. 13 and FIG. 14, the second inverter is, but not limited to, a thyristor inverter or an uncontrolled rectifier bridge constituted of diodes. FIG. 13 is a schematic diagram of the compensator using an uncontrolled rectifier bridge, constituted of diodes, as the second inverter, on the basis of FIG. 6. FIG. 14 is a schematic diagram of the compensator with the second inverter formed by third power units, or fourth power units, or the third power units and the fourth power units connected in series in any sequences, on the basis of FIG. 6.

Each of the third power units comprises an eleventh turn-off device T11, a twelfth turn-off device T12, a seventh turn-off device T7, a first diode D1 and a third capacitor C3, wherein the positive electrode of the eleventh turn-off device T11 is connected to a negative electrode of the twelfth turn-off device T12 and used as a second output terminal of the third power unit; one terminal of the third capacitor C3 and a positive electrode of the twelfth turn-off device T12 are connected to the negative electrode of the first diode D1, the other terminal of the third capacitor C3 and the negative electrode of the eleventh turn-off device T11 are connected to the negative electrode of the seventh turn-off device T7, and the positive electrode of the first diode D1 is connected to the positive electrode of the seventh turn-off device T7 and used as another output terminal of the third power unit.

Each of the fourth power units at least comprises an eighth turn-off device T8, a ninth turn-off device T9, a tenth turn-off device T10, a second diode D2 and a fourth capacitor C4, wherein the negative electrode of the second diode D2 is connected to the negative electrode of the eighth turn-off device T8 and used as an output terminal of the fourth power unit, the positive electrode of the eighth turn-off device T8 and the positive electrode of the tenth turn-off device T10 are connected to one terminal of the fourth capacitor C4, the positive electrode of the second diode D2 and the negative electrode of the ninth turn-off device T9 are connected to the other terminal of the fourth capacitor C4, and the positive electrode of the ninth turn-off device T9 is connected to the negative electrode of the tenth turn-off device T10 and used as another output terminal of the fourth power unit.

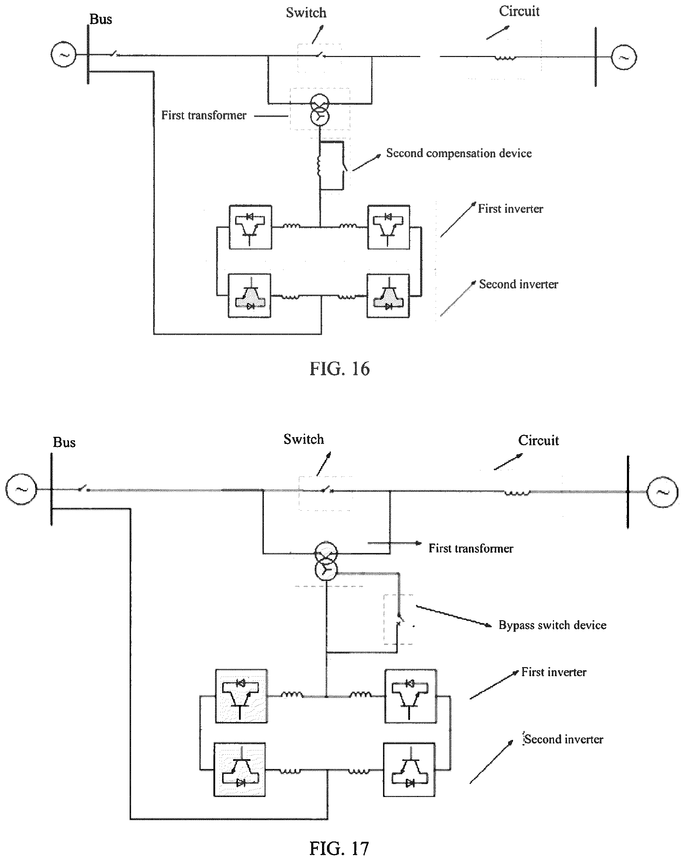

FIG. 15 is a schematic diagram of the compensator having a first compensation device connected in series thereto, on the basis of FIG. 6. As shown in FIG. 15, the first compensation device is connected in series between the second side winding of the first transformer and the circuit. FIG. 16 is a schematic diagram of the compensator having a second compensation device connected in series thereto, on the basis of FIG. 6. As shown in FIG. 16, the second compensation device is connected in series between the first side winding of the first transformer and the alternating current-side interface of the first inverter. The first compensation device and the second compensation device are connected in parallel to a switch device through a reactor bank, the reactor bank comprises at least one reactor connected in series, and the switch device is, but not limited to, a mechanical switch, or a switch constituted of a power electronic device.

FIG. 17 is a schematic diagram of the compensator having a bypass switch device connected in parallel thereto, on the basis of FIG. 6. As shown in FIG. 17, the bypass switch device is connected in parallel to two terminals of the first side winding of the first transformer, and the bypass switch device is, but not limited to, a mechanical switch, or a switch formed by a power electronic device.

The first side winding of the first transformer is in a Y-connection mode or a delta connection mode. When the first side winding of the first transformer is in the Y-connection mode, a neutral point is grounded directly or through a resistor. When the first transformer comprises a third side winding, the third side winding is in the delta connection mode. On-off of the turn-off devices in the combined power units can be controlled by means of an external device so as to change and regulate output voltages of the power units, so that desired voltages of the direct current side and the alternating current side of the second inverter and the first inverter can be determined. The alternating current-side output voltage of the first inverter is connected in series to the circuit through the first transformer, which is equivalent to connecting a voltage source with a controllable amplitude and a controllable phase to the circuit, so that an amplitude difference and a phase difference between voltages of two terminals of the circuit are changed, and control and regulation of the active power and reactive power of the circuit are realized. The second inverter is connected to the alternating system to control a reactive or access voltage output by the parallel side and to maintain the DC bus voltage. The output voltage of the first power units may be 0 or the voltage of the capacitors in the power unit, and the output voltage of the second power units, the third power units and the fourth power units may be 0, the voltage of the capacitors in the power units, or the negative value of the voltage of the capacitors in the power units.

In the first inverter, the sum of the output voltages of all the power units of the first branch circuit is equal to the sum of the output voltages of all the power units of the second branch circuit, the sum of the output voltages of all the power units of the third branch circuit is equal to the sum of the output voltages of all the power units of the fourth branch circuit, the sum of the output voltages of all the power units of the fifth branch circuit is equal to the sum of the output voltages of all the power units of the sixth branch circuit, and the direct current-side voltage is equal to the output voltage, so that by configuring the second power units with the output voltage equal to the negative capacitor voltage in the combined power units, the direct current-side voltage can be decreased, and the cost of the series-parallel compensation device can be reduced. During normal operation, by controlling the second power units to output negative voltages, the direct voltage can be decreased under the precondition that the alternating voltage connected in series to the circuit is not changed, and the current can be decreased in case of a fault. When a fault happens to the direct current side, the fault current can be effectively restrained by means of the characteristic of bidirectional voltage output of the second power units

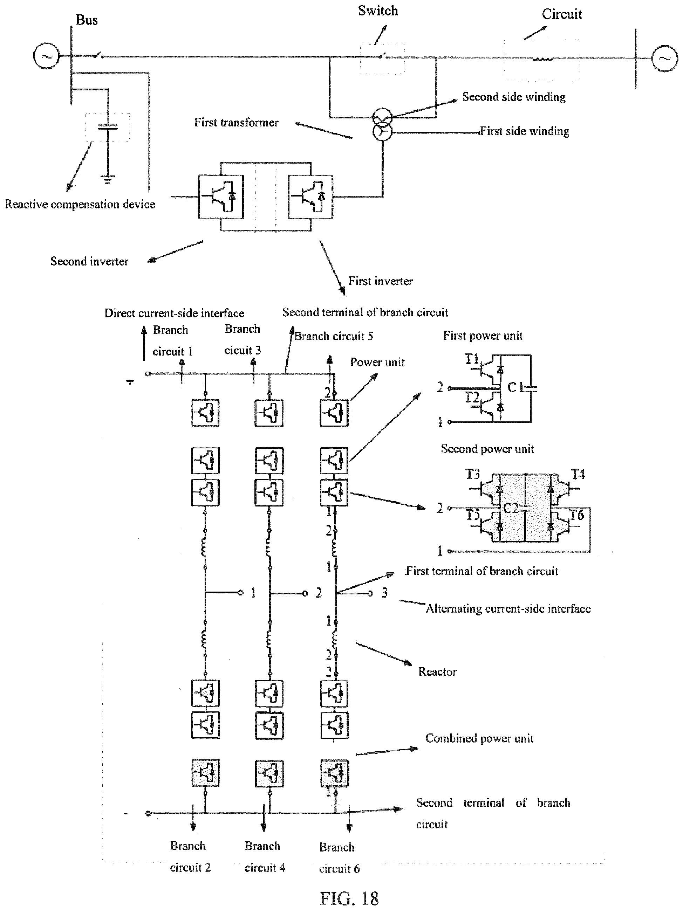

FIG. 18 is a schematic diagram of the compensator configured with a reactive compensation device, provided by one embodiment of the present application. As shown in FIG. 18, the compensator comprises a first inverter, a second inverter, a first transformer, a switch and a reactive compensation device. The second inverter comprises an alternating current-side interface and a direct current-side interface and is connected to an alternating current system through the alternating current-side interface. The reactive compensation device is connected to the alternating current system. The first inverter, the second inverter, the first transformer and the switch are identical with the first inverter, the second inverter, the first transformer and the switch in the above embodiment and will not be detailed anymore. The reactive compensation device is, but not limited to, a fixed capacitor, a capacitor switched by a mechanical switch or a thyristor switch, a switchable capacitor bank, a static var compensator (SVC), or the like.

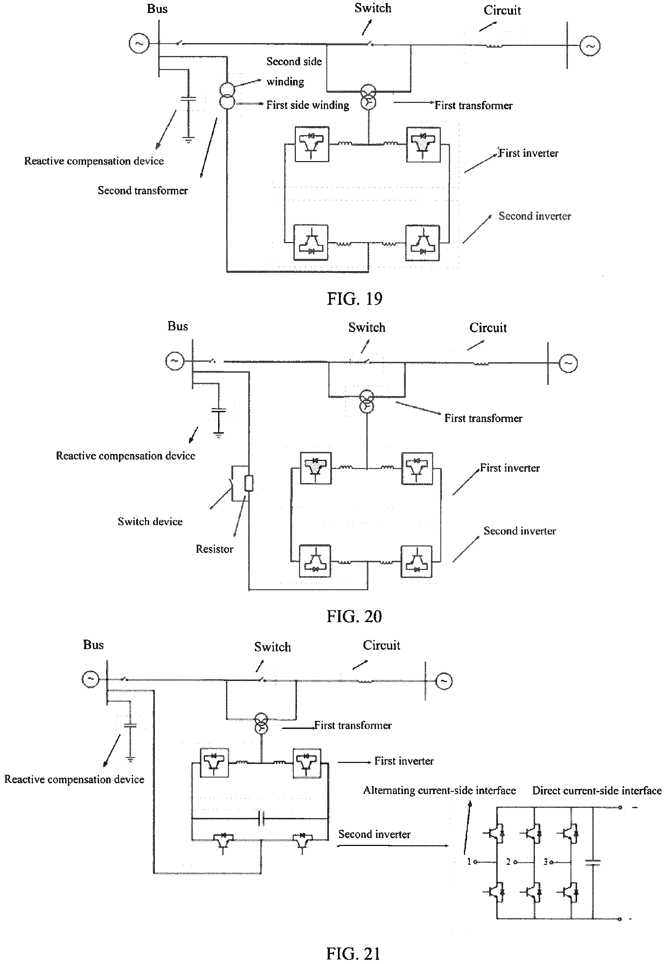

FIG. 19 is a schematic diagram of the compensator with the second inverter connected to the alternating current system through the first transformer, on the basis of FIG. 18. As shown in FIG. 19, the second inverter is connected to the alternating current system through a second transformer, and a second side winding of the second transformer is connected in parallel to the alternating current system. The second transformer is a three-phase transformer and at least comprises two side windings, and the alternating current-side interface of the second inverter is connected to the first side winding of the second transformer. FIG. 20 is a schematic diagram of the compensator configured with a resistor and a switch device connected in parallel, on the basis of FIG. 18. As shown in FIG. 20, a resistor and a switch device are connected in parallel between the alternating current-side interface of the second inverter and the alternating current system, and the switch device is, but not limited to, a knife switch or a switch.

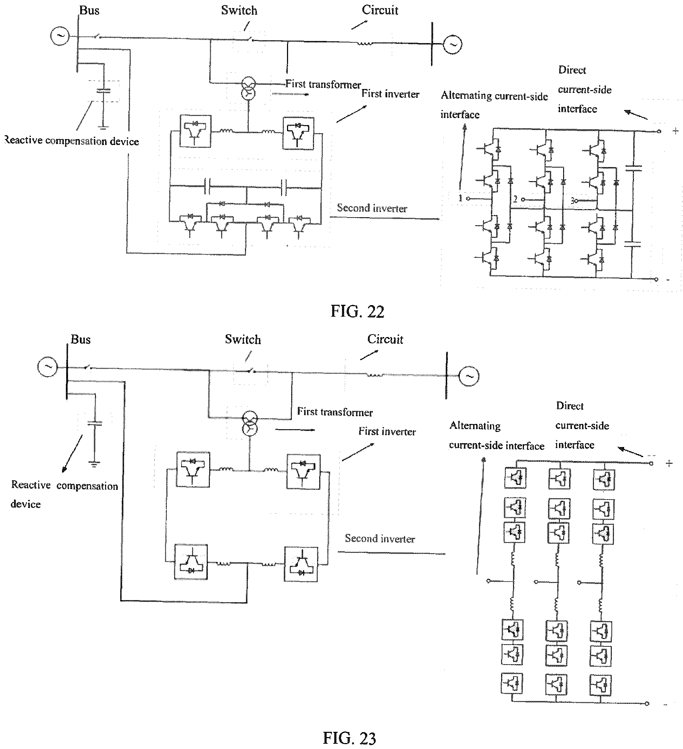

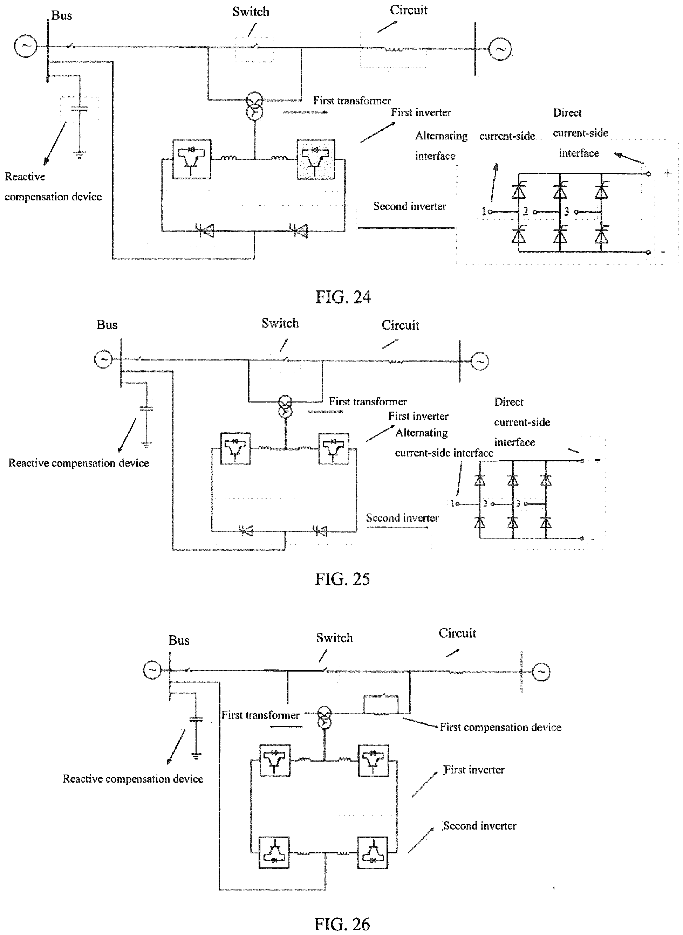

The second inverter may be a voltage source inverter and is, but not limited to, of a two-level structure, a three-level structure, a multi-transformer structure or a modular multi-level structure, as shown in FIG. 21, FIG. 22 and FIG. 23. FIG. 21 is a schematic diagram of the compensator using a two-level inverter as the second inverter, on the basis of FIG. 18. FIG. 22 is a schematic diagram of the compensator using a three-level inverter as the second inverter, on the basis of FIG. 18. FIG. 23 is a schematic diagram of the compensator using a modular multi-level inverter as the second inverter, on the basis of FIG. 18. The second inverter of the modular multi-level structure is formed by third power units, or fourth power units, or the third power units and the fourth power units connected in series in any sequences. The second inverter is, but not limited to, a thyristor inverter, or an uncontrolled rectifier bridge constituted of diodes, as shown in FIG. 24 and FIG. 25. FIG. 24 is a schematic diagram of the compensator using the thyristor inverter as the second inverter, on the basis of FIG. 18. FIG. 25 is a schematic diagram of the compensator using the uncontrolled rectifier bridge, constituted of diodes, as the second inverter, on the basis of FIG. 18.

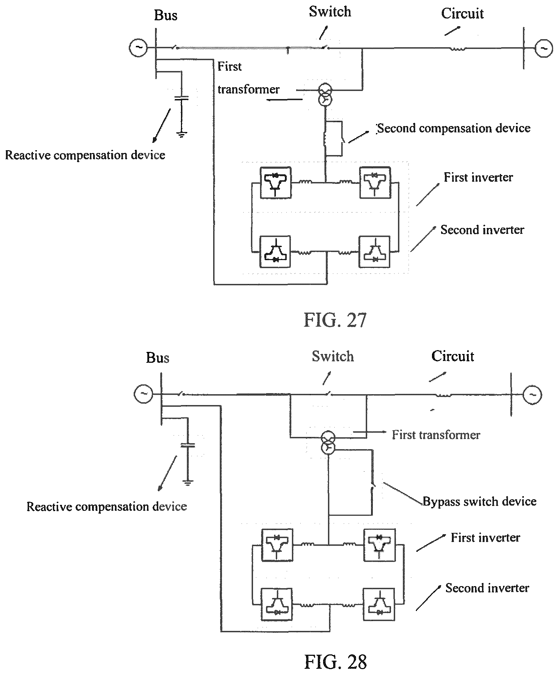

FIG. 26 is a schematic diagram of the compensator having a first compensation device connected in series thereto, on the basis of FIG. 18. As shown in FIG. 26, the first compensation device is connected in series between the second side winding of the first transformer and the circuit. FIG. 27 is a schematic diagram of the compensator having a second compensation device connected in series thereto, on the basis of FIG. 18. As shown in FIG. 27, the compensation device is connected in series between the first side winding of the first transformer and the alternating current-side interface of the first inverter. The first compensation device and the second compensation device are connected to the switch device through a reactor bank, the reactor bank comprises at least one reactor connected in series, and the switch device is, but not limited to, a mechanical switch, or a switch formed by a power electronic device. FIG. 28 is a schematic diagram of the compensator having a bypass switch device connected in parallel thereto, on the basis of FIG. 18. As shown in FIG. 28, the bypass switch device is connected in parallel to two terminals of the first side winding of the first transformer, and the bypass switch is, but not limited to, a mechanical switch, or a switch formed by a power electronic device.

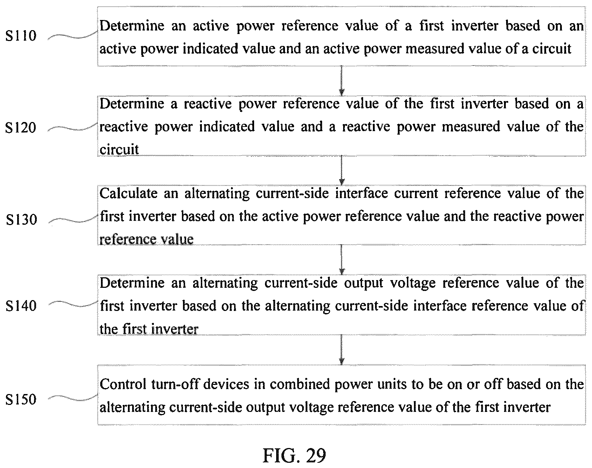

FIG. 29 is a flow diagram of a control method of the compensator, provided by one embodiment of the present application. The control method comprises the following steps:
S110: an active power reference value of the first inverter is determined based on an active power indicated value and an active power measured value of a circuit.
S120: a reactive power reference value of the first inverter is determined on the basis of a reactive power indicated value and a reactive power measured value of the circuit.
S130: an alternating current-side interface current reference value of the first inverter is calculated based on the active power reference value and the reactive power reference value of the first inverter.
S140: an alternating current-side output voltage reference value of the first inverter is determined based on the alternating current-side interface current reference value of the first inverter.
S150: turn-off devices in combined power units are controlled to be on or off based on the alternating current-side output voltage reference value of the first inverter to control output voltages of the combined power units to ensure that the numbers of first and second power units respectively outputting a 0 voltage, a capacitor voltage and a negative capacitor voltage at a same time meet an alternating current-side output voltage reference value and a direct current-side output voltage reference value, so that the direct current-side voltage is decreased under the precondition that compensation is guaranteed.

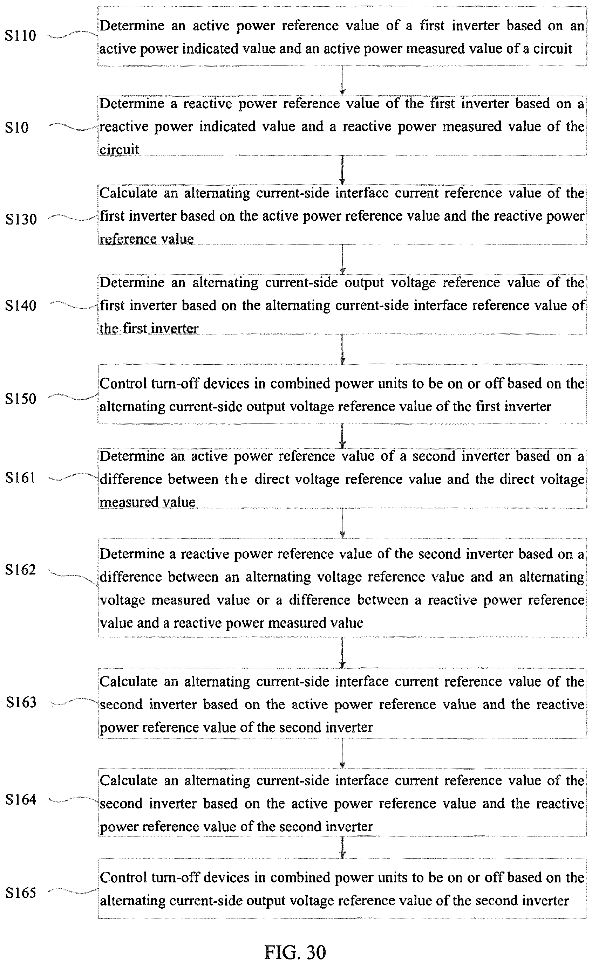

FIG. 30 is a flow diagram of a control method of the compensator, provided by another embodiment of the present application. The control method comprises the following steps:
S110: an active power reference value of a first inverter is determined based on an active power indicated value and an active power measured value of a circuit.
S120: a reactive power reference value of the first inverter is determined based on a reactive power indicated value and a reactive power measured value of the circuit.
S130: an alternating current-side interface current reference value of the first inverter is calculated based on the active power reference value and the reactive power reference value of the first inverter.
S140: an alternating current-side output voltage reference value of the first inverter is determined based on the alternating current-side interface current reference value of the first inverter.
S150: turn-off devices in combined power units are controlled to be on or off based on the alternating current-side output voltage reference value of the first inverter to control output voltages of the combined power units to ensure that the numbers of first and second power units respectively outputting a 0 voltage, a capacitor voltage and a negative capacitor voltage at a same time meet an alternating current-side output voltage reference value and a direct current-side output voltage reference value, so that the direct current-side voltage is decreased under the precondition that compensation is guaranteed.
S161: an active power reference value of a second inverter is determined based on a difference between a direct voltage reference value and the direct voltage measured value.
S162: a reactive power reference value of the second inverter is determined based on a difference between an alternating voltage reference value and an alternating voltage measured value or a difference between a reactive power reference value and a reactive power measured value.
S163: an alternating current-side interface current reference value of the second inverter is calculated based on the active power reference value and the reactive power reference value of the second inverter.
S164: an alternating current-side output voltage reference value of the second inverter is calculated based on the alternating current-side interface current reference value of the second inverter.
S165: turn-off devices in combined power units are controlled to be on or off based on the alternating current-side output voltage reference value of the second inverter, and voltage combinations output by third power units and fourth power units are controlled to ensure that that the numbers of the third and fourth power units respectively outputting a 0 voltage, a capacitor voltage and a negative capacitor voltage at a same time meet an alternating current-side output voltage reference value and a direct current-side output voltage reference value.

In this embodiment, when the compensator is to be started, the method further comprises before S110:
S101 : the second inverter is started to establish a direct voltage.
S102: the first inverter is unlocked.
S103: the current of a switch is controlled to decrease gradually and the current of the circuit to migrate gradually to a second side winding of a first transformer.
S104: after the current of the switch decreases to zero, the switch is turned off to start the compensator.

In this embodiment, when the compensator is to be stopped, the method further comprises after S166:
S171: the current of the second side winding of the first transformer is controlled to be equal to the current of the circuit.
S172: the switch is turned on.
S173: the current is controlled to migrate gradually from the second side winding of the first transformer to the switch.
S174: when the current of the second side winding of the first transformer decreases to zero, the first inverter is locked.
S175: the second inverter is quitted to stop the compensator.

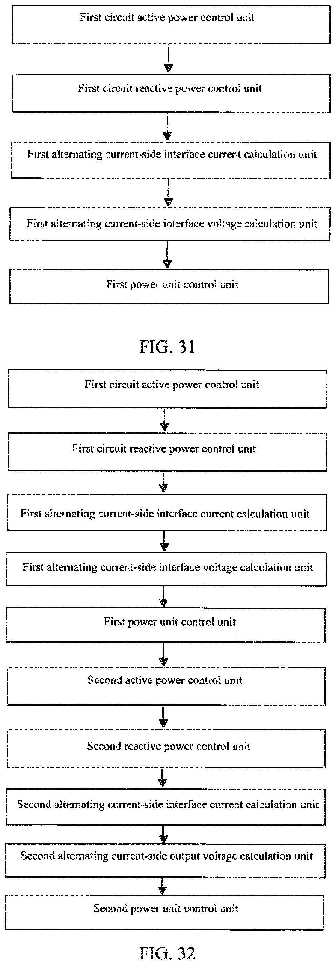

FIG. 31 is a component diagram of a control device of a compensator, provided by one embodiment of the present application. As shown in FIG. 31, the compensator comprises a first inverter. The control device comprises a first circuit active power control unit, a first circuit reactive power control unit, a first alternating current-side interface current calculation unit, a first alternating current-side interface voltage calculation unit and a first power unit control unit.

The first circuit active power control unit is used for determining an active power reference value of the first inverter based on an active power indicated value and an active power measured value of a circuit. The first circuit reactive power control unit is used for determining a reactive power reference value of the first inverter based on a reactive power indicated value and a reactive power measured value of the circuit. The first alternating current-side interface current calculation unit is used for calculating an alternating current-side interface current reference value of the first inverter based on the active power reference value and the reactive power reference value of the first inverter. The first alternating current-side interface voltage calculation unit is for determining an alternating current-side output voltage reference value of the first inverter based on the alternating current-side interface current reference value of the first inverter. The first power unit control unit is used for controlling on-off of turn-off devices in combined power units based on the alternating current-side output voltage reference value of the first inverter so as to control output voltages of the combined power units to ensure that the numbers of first power units and second power units respectively outputting a 0 voltage, a capacitor voltage and a negative capacitor voltage at a same time meet an alternating current-side output voltage reference value and a direct current-side output voltage reference value, so that the direct current-side voltage is decreased under the precondition that compensation is guaranteed.

FIG. 32 is a component diagram of a control device of a compensator, provided by another embodiment of the present application. The compensator comprises a first inverter and a second inverter. The control device comprises a first circuit active power control unit, a first circuit reactive power control unit, a first alternating current-side interface current calculation unit, a first alternating current-side interface voltage calculation unit, a first power unit control unit, a second active power control unit, a second reactive power control unit, a second alternating current side-interface current calculation unit, a second alternating current-side interface voltage calculation unit and a second power unit control unit.

The second active power control unit is used for determining an active power reference value of the second inverter based on a difference between a direct voltage reference value and a direct voltage measured value. The second reactive power control unit is used for determining a reactive power reference value of the second inverter according to a difference between an alternating voltage reference value and an alternating voltage measured value or a difference between a reactive power reference value and a reactive power measured value. The second alternating current-side interface current calculation unit is used for calculating an alternating current-side interface current reference value of the second inverter based on the active power reference value and the reactive power reference value of the second inverter. The second alternating current-side output voltage calculation unit is used for calculating an alternating current-side output voltage reference value of the second inverter based on the alternating current-side interface current reference value of the second inverter. The second alternating current-side output voltage calculation unit is used for controlling on-off of turn-off devices in second combined power units based on the alternating current-side output voltage reference value of the second inverter so as to control voltage combinations of third power units and fourth power units to ensure that the numbers of the third and fourth power units respectively outputting a 0 voltage, a capacitor voltage and a negative capacitor voltage at a same time meet an alternating current-side output voltage reference value and a direct current-side output voltage reference value.

In this embodiment, as an optional technical solution, the control device further comprises a start control unit and a stop control unit.

The start control unit is used for starting the second inverter to establish a direct voltage when the compensator is to be started, unlocking the first inverter, controlling the current of a switch to decrease gradually and the current of the circuit migrate gradually to the second side winding of the first transformer, and turning off the switch to start the compensator when the current of the switch decreases to zero. The stop control unit is used for controlling the current of the second side winding of the first transformer to be equal to the current of the circuit when the compensator is to be stopped, turning on the switch, controlling the current to migrate gradually from the second side winding of the first transformer to the switch, locking the first inverter after the current of the second side winding of the first transformer decreases to zero, and quitting the second inverter to stop the compensator.

It should be noted that the embodiments described above with reference to the accompanying drawings are merely for explaining the present application, and are not intended to limit the scope of the present application. Those ordinarily skilled in the art would appreciate that all modifications or equivalent substitutions made to the present application without departing from the spirit and scope of the present application should also fall within the scope of the present application. In addition, unless otherwise specified in the specification, terms in the singular form may also be in the plural form, vice versa. Moreover, unless otherwise specifically stated, one part or all of any embodiment can be combined with one part or all of any other embodiments to be implemented.

## Claims

1. A compensator, comprising:
a first inverter, comprising six branch circuits, wherein the branch circuits comprise combined power units and reactors connected in series, the combined power units comprise first power units and second power units connected in series or second power units connected in series; wherein
each of the first power units at least comprises a first turn-off device T1, a second turn-off device T2 and a first capacitor C1, one terminal of the first capacitor C1 is connected to a positive electrode of the first turn-off device T1, another terminal of the first capacitor C1 is connected to a negative electrode of the second turn-off device T2 and used as a first output terminal of the first power unit, and a positive electrode of the second turn-off device is connected to a negative electrode of the first turn-off device and used as a second output terminal of the first power unit;
each of the second power units at least comprises a third turn-off device T3, a fourth turn-off device T4, a fifth turn-off device T5, a sixth turn-off device T6 and a second capacitor C2, one terminal of the second capacitor C2 is connected to a positive electrode of the third turn-off device T3 and a positive electrode of the fourth turn-off device T4, another terminal the second capacitor C2 is connected to a negative electrode of the fifth turn-off device T5 and a negative electrode of the sixth turn-off device T6, a negative electrode of the third turn-off device T3 is connected to a positive electrode of the fifth turn-off device T5 and used as a second output terminal of the second power unit, and a negative electrode of the fourth turn-off device T4 is connected to a positive electrode of the sixth turn-off device T6 and used as a first output terminal of the second power unit;
a first transformer, at least comprising a first side winding and a second side winding, wherein the first side winding is connected to an alternating current-side interface of the first inverter, the second side winding is connected in series to a circuit of an alternating current system, and two terminals of the second side winding are connected in parallel to a switch; and
the switch, connected in parallel to the first transformer and then connected to the circuit of the alternating current system.

2. The compensator according to Claim 1, further comprising:
a second inverter, comprising an alternating current-side interface through which the second inverter is connected to the alternating current system, and a direct current-side interface connected in parallel to the first inverter.

3. The compensator according to Claim 1, further comprising a reactive compensation device connected to the alternating current system.

4. The compensator according to Claim 1, wherein in the six branch circuits, a first terminal of a first branch circuit is connected to a first terminal of a second branch circuit where a connection point thereof is defined as a first alternating current-side interface; a first terminal of a third branch circuit is connected to a first terminal of a fourth branch circuit where a connection point thereof is defined as a second alternating current-side interface; a first terminal of a fifth branch circuit is connected to a first terminal of a sixth branch circuit where a connection point thereof is defined as a third alternating current-side interface; a second terminal of the first branch circuit is connected to a second terminal of the third branch circuit and a second terminal of the fifth branch circuit where a connection point thereof is defined as a direct current-side positive interface; a second terminal of the second branch circuit is connected to a second terminal of the fourth branch circuit and a second terminal of the sixth branch circuit where a connection point thereof is defined as a direct current-side negative interface.

5. The compensator according to Claim 1, wherein the turn-off devices include one or more controllable switch devices which are one of IGBTs, IGCTs, MOSFETs and GTOs.

6. The compensator according to Claim 1, wherein a first compensation device is connected in series between the second side winding of the first transformer and the circuit.

7. The compensator according to Claim 1, wherein a second compensation device is connected in series between the first side winding of the first transformer and the alternating current-side interface of the first inverter.

8. The compensator according to Claim 6 or 7, wherein the first compensation device or the second compensation device comprises a reactor bank and a switch device connected in parallel, the reactor bank comprises at least one reactor connected in series, and the switch device includes one or more of a mechanical switch and a switch constituted of a power electronic device.

9. The compensator according to Claim 1, wherein two terminals of the first side winding of the first transformer are connected in parallel to a bypass switch device, and the bypass switch device includes one or more of a mechanical switch and a switch constituted of a power electronic device.

10. The compensator according to Claim 1, wherein the first side winding of the first transformer is in a Y-connection mode or a delta-connection mode.

11. The compensator according to Claim 1, wherein the first side winding of the first transformer is in a Y-connection mode and has a neutral point grounded directly or through a resistor, and the first transformer comprises a third side winding in a delta-connection mode.

12. The compensator according to Claim 2, wherein the second inverter is connected to the alternating current system through a second transformer, the second transformer is a three-phase transformer and at least comprises two side windings, the alternating current-side interface of the second inverter is connected to the first side winding of the second transformer, and the second side winding of the second transformer is connected in parallel to the alternating current system.

13. The compensator according to Claim 2, wherein a resistor and a switch device connected in parallel are configured between the alternating current-side interface of the second inverter and the alternating current system, and the switch device is a knife switch or a switch.

14. The compensator according to Claim 2, wherein the second inverter is a voltage source inverter and is of a two-level structure, a three-level structure, a multi-transformer structure or a modular multi-level structure.

15. The compensator according to Claim 2, wherein the second inverter is a thyristor inverter or an uncontrolled rectifier bridge constituted of diodes.

16. A method of controlling a compensator, comprising:
determining an active power reference value of a first inverter based on an active power indicated value and an active power measured value of a circuit;
determining a reactive power reference value of the first inverter based on a reactive power indicated value and a reactive power measured value of the circuit;
calculating an alternating current-side interface current reference value of the first inverter based on the active power reference value and the reactive power reference value of the first inverter;
determining an alternating current-side output voltage reference value of the first inverter based on the alternating current-side interface current reference value of the first inverter; and
controlling turn-off devices in combined power units to be on or off based on the alternating current-side output voltage reference value of the first inverter, so as to control output voltages of the combined power units to ensure that numbers of first power units and second power units respectively outputting a 0 voltage, a capacitor voltage and a negative capacitor voltage at a same time meet an alternating current-side output voltage reference value and a direct current-side output voltage reference value, so that a direct current-side voltage is decreased under a precondition that compensation is guaranteed.

17. The method according to Claim 16, wherein when the compensator is to be started, the method further comprises, before determining an active power reference value of a first inverter based on an active power indicated value and an active power measured value of a circuit:
unlocking the first inverter;
controlling a current through a switch to decrease gradually and a current of the circuit to migrate gradually to the second side winding of the first transformer; and
turning off the switch, after the current through the switch decreases to zero, to start the compensator.

18. The method according to Claim 17, wherein in case that the compensator comprises a second inverter, when the compensator is to be started, the method further comprises, before unlocking the first inverter:
starting the second inverter to establish a direct voltage.

19. The method according to Claim 16, wherein when the compensator is to be stopped, the method further comprises, before controlling turn-off devices in combined power units to be on or off based on the alternating current-side output voltage reference value of the first inverter:
controlling a current of the second side winding of the first transformer to be equal to that of the circuit;
turning on the switch;
controlling the current to migrate gradually from the second side winding of the first transformer to the switch; and
locking the first inverter after the current of the second side winding of the first transformer decreases to zero.

20. The method according to Claim 19, wherein in case that the compensator comprises a second inverter, when the compensator is to be stopped, the method further comprises, after locking the first inverter after the current of the second side winding of the first transformer decreases to zero:
quitting the second inverter to stop the compensator.

21. A control device of a compensator, comprising:
a first circuit active power control unit for determining an active power reference value of a first inverter based on an active power indicated value and an active power measured value of a circuit;
a first circuit reactive power control unit for determining a reactive power reference value of the first inverter based on a reactive power indicated value and a reactive power measured value of the circuit;
a first alternating current-side interface current calculation unit for calculating an alternating current-side interface current reference value of the first inverter based on the active power reference value and the reactive power reference value of the first inverter;
a first alternating current-side interface voltage calculation unit for determining an alternating current-side output voltage reference value of the first inverter based on the alternating current-side interface current reference value of the first inverter; and
a first power unit control unit for controlling turn-off devices in combined power units to be on or off based on the alternating current-side output voltage reference value of the first inverter, so as to control output voltages of the combined power units to ensure that numbers of first power units and second power units respectively outputting a 0 voltage, a capacitor voltage and a negative capacitor voltage at a same time meet an alternating current-side output voltage reference value and a direct current-side output voltage reference value, so that a direct current-side voltage is decreased under a precondition that compensation is guaranteed.

22. The control device of the compensator according to Claim 21, further comprising:
a start control unit for unlocking the first inverter when the compensator is to be started, controlling a current through a switch to decrease gradually and a current of the circuit to migrate gradually to the second side winding of the first transformer, and turning off the switch to start the compensator after the current of the switch decreases to zero; and
a stop control unit for controlling a current of the second side winding of the first transformer to be equal to that of the circuit when the compensator is to be stopped, turning on the switch, controlling the current to migrate gradually from the second side winding of the first transformer to the switch, and locking the first inverter to stop the compensator after the current of the second side winding of the first transformer is zero.

23. The control device of the compensator according to Claim 21, wherein the compensator comprises a second inverter, the control device further comprises:
a start control unit for starting the second inverter to establish a direct voltage when the compensator is to be started, unlocking the first inverter, controlling a current through a switch to decrease gradually and a current of the circuit to migrate gradually to the second side winding of the first transformer, and turning off the switch to start the compensator after the current of the switch decreases to zero; and
a stop control unit for controlling a current of the second side winding of the first transformer to be equal to that of the circuit when the compensator is to be stopped, turning on the switch, controlling the current to migrate gradually from the second side winding of the first transformer to the switch, locking the first inverter after the current of the second side winding of the first transformer decreases to zero, and quitting the second inverter to stop the compensator.
